# FASCICULE DE BREVET EUROPEEN

(11) **EP 3 861 904 B1**
(45) Date de publication et mention de la délivrance du brevet: **12.10.2022**
(21) Numéro de dépôt: 21151874.1
(22) Date de dépôt: 15.01.2021
(51) Int. Cl.: A47J 43/07

(54) **HACHOIR MANUEL À DOUBLE SYSTÈME D'ÉTANCHÉITÉ**
HACKMESSER MIT DOPPELTEN DICHTUNGSSYSTEM
MANUAL CHOPPER WITH DOUBLE SEALING SYSTEM

(30) Priorité: 07.02.2020 FR 2001214
(43) Date de publication de la demande: 11.08.2021
(73) Titulaire: SEB S.A., 69130 Ecully (FR)
(72) Inventeur: PLICHON, Stéphane, 74350 ALLONZIER-LA-CAILLE (FR); BENOIT, David, 74540 GRUFFY (FR)
(74) Mandataire: SEB Développement

(56) Documents cités:
- EP-A1- 0 963 726
- EP-A1- 3 311 718
- FR-A1- 2 896 395

## Description

### Domaine technique de l'invention

La présente invention se rapporte au domaine culinaire et notamment à celui des appareils culinaires comprenant un dispositif d'entrainement à corde à commande manuelle et un bol formant un récipient, tels que des hachoirs, des presse-purée, des extracteurs de jus, des essoreuses à salade ou des mélangeurs. Ces appareils sont actionnés manuellement, et sont donc non électriques, permettant de transmettre un mouvement d'une pièce à une autre pièce par traction d'un câble ou d'une corde. La présente invention se rapporte plus particulièrement aux appareils du type précité comportant un joint d'étanchéité entre le récipient de travail et la partie supérieure de l'appareil. On notera que, dans ce document, les termes «longitudinal», «transversal», «perpendiculaire», «parallèle», «rotation», «horizontal», «vertical», «inférieur», «supérieur», «haut», «bas», «sécant», «coaxiaux», «convexe», «concave», «plan» employés pour décrire le dispositif, font référence à ce dispositif en situation d'usage, lorsqu'il est posé sur un plan horizontal.

### Technique antérieure

Il est connu des appareils culinaires avec des joints toriques en matière souple comme le silicone montés sur un couvercle, qui réduisent l'espace entre le couvercle et son bol, permettant une étanchéité relative aux liquides. EP 3 311 718 A1 constitue l'état de la technique le plus proche de l'invention et divulgue le préambule de la revendication 1.

L'inconvénient de ces joints toriques est leur faible variation dimensionnelle, provoquant un moindre degré de liberté et de compressibilité. En effet, pour assurer une étanchéité entre 2 parois, il convient qu'un joint puisse s'insérer dans l'espace entre ces 2 parois et combler cet espace afin de garantir une étanchéité. Or, la capacité de compression des joints toriques est faible ce qui a pour conséquence de limiter leur capacité à s'adapter et à combler l'espace. De plus, certains hachoirs manuels possèdent un dispositif de fermeture par baïonnettes. Pour réaliser la fermeture avec de tels dispositifs à baïonnettes, le couvercle doit être placé au-dessus du bol et doit entrer en rotation pour atteindre la position fermée et vis-versa pour la position ouverte. La capacité d'un joint torique à permettre cette rotation du couvercle pour un enclenchement par baïonnette est limitée à cause de la friction du joint contre le bol. En effet, la force de friction nécessaire pour enclencher le couvercle sur le bol, par un dispositif à baïonnette, est trop importante et n'est pas acceptable pour une ouverture aisée par un utilisateur. La faible variation dimensionnelle des joints toriques ne permet pas de diminuer cette friction et à tendance à provoquer un blocage en rotation, d'autant plus que le joint torique est dimensionné pour le jeu maximum garantissant l'étanchéité. L'inconvénient des joints toriques est de n'accepter qu'une faible plage de tolérance de variation dimensionnelle, ce qui n'est pas compatible avec les tolérances nécessaires lorsque les pièces sont obtenues avec les méthodes d'injections plastiques.

De plus, les appareils de préparation culinaire à entrainement manuel comprennent un bol pour contenir les aliments à traiter, un accessoire de travail rotatif amovible disposé dans le bol, qui est généralement un système d'entrainement en rotation de couteaux, un couvercle amovible fermant le bol comprenant un moteur à commande manuelle pour entrainer en rotation un arbre d'entraînement et l'accessoire de travail rotatif autour d'un axe de rotation par traction d'une corde transversalement à l'axe de rotation. Le moteur à commande manuelle comprend généralement une roue d'entrainement, un ressort de rappel et une corde dont une extrémité est enroulée autour de la roue d'entrainement et dont l'autre extrémité est reliée à une poignée.

Pour que la rotation des couteaux ou lames de découpage puisse se faire correctement, il est souvent nécessaire de prévoir un jeu entre la partie rotative et la partie fixe pour une rotation libre sans friction.

Par le terme « jeu », il est généralement entendu au sens de l'invention une aisance de mouvement d'un élément due à un espace entre deux pièces ou deux surfaces. Là encore, les mêmes problèmes se posent avec les joints toriques, souvent utilisés pour éliminer ce jeu entre les pièces, à cause de leur faible variation dimensionnelle, provoquant un moindre degré de liberté et de compressibilité.

Aussi minime que puisse être le jeu, il y a souvent la possibilité pour une préparation alimentaire semi-liquide à liquide de remonter le long de l'entraineur (système d'entrainement de couteaux en rotation) et de passer dans la zone intérieure du couvercle où le mécanisme d'actionnement manuel est présent. Il est impossible de nettoyer correctement cette zone sans démonter le couvercle, qui souvent n'est pas conçu pour être démontable. Le joint torique ne pouvant pas s'adapter à l'espace à combler, celui-ci étant d'autant plus important et variable lorsque les pièces sont issues d'un procédé d'injection plastique, l'étanchéité du hachoir n'est pas assurée.

Le but de l'invention est donc de remédier aux inconvénients précités et de fournir un hachoir manuel avec une étanchéité parfaite au niveau des jeux entre le couvercle et le bol, et entre le couvercle et l'arbre d'entrainement, sans gêner la rotation du couvercle ou de l'arbre d'entrainement. Ainsi le problème résolu par l'invention est de réaliser une étanchéité tout en maintenant la mobilité, notamment en rotation, des pièces du couvercle. Ainsi une étanchéité parfaite du hachoir au niveau du couvercle et du bol permet à un utilisateur de préparer des préparations alimentaires liquides dans le bol et de mélanger cette préparation alimentaire en secouant le hachoir.

De manière inattendue, les inventeurs ont mis en évidence qu'il est possible d'utiliser des joints avec une lèvre annulaire mobile et déformable pour permettre d'offrir une étanchéité du hachoir tout en gardant la nécessité de la libre rotation du couvercle et de l'arbre d'entrainement.

Le hachoir selon l'invention présente l'avantage que le joint à lèvre annulaire permet une rotation du couvercle sans effort pour pivoter le couvercle sur le bol et atteindre la position fermée ou vice-versa la position ouverte par un dispositif de fermeture à baïonnette. La surface de contact de la lèvre annulaire du joint avec la partie fixe du bol étant très mince, les frictions sont très faibles. De plus, la flexion de la lèvre annulaire lui permet d'opérer une faible résistance et de ne pas résister ou bloquer le couvercle lors de sa rotation, autorisant ainsi une libre rotation de la partie rotative, suffisante pour faire une barrière étanche à la préparation semi-liquide à liquide.

De plus le hachoir selon l'invention présente l'avantage de proposer une seule géométrie du joint, mais deux localisations sur le couvercle pour garantir son étanchéité. La même géométrie de joint est utilisée pour le logement du couvercle et le logement de l'arbre d'entrainement.

Un autre avantage de l'invention est que le joint peut s'adapter aux variations dimensionnelles dans l'espace dans lequel il est introduit, c'est-à-dire le logement du joint.

Un autre avantage de l'invention est que le hachoir peut être agité manuellement par un utilisateur afin de secouer la préparation alimentaire semi-liquide ou liquide pour mélanger les préparations, sans projection en dehors de l'appareil et sans projection à l'intérieur du couvercle où réside le mécanisme d'entrainement.

Un autre avantage de l'invention est que le joint peut coopérer avec le couvercle. En effet sa nature souple et sa conception structurelle lui permettent de se compresser, ni trop, ni trop peu, pour compenser le jeu réel entre le couvercle et le bol, et le couvercle et l'arbre d'entrainement.

### Exposé de l'invention

La présente invention a pour objet un appareil de préparation culinaire à entrainement manuel comportant
un bol pour contenir les aliments à traiter avec une face latérale,
un accessoire de travail rotatif amovible disposé dans le bol,
un couvercle amovible disposé sur le bol,
le couvercle comprenant un moteur à commande manuelle pour entrainer en rotation un arbre d'entraînement de l'accessoire de travail rotatif autour d'un axe A de rotation par traction d'une corde transversalement à l'axe A de rotation,
un premier joint d'étanchéité dynamique disposé entre le couvercle et la face latéral du bol afin de combler l'espace entre le couvercle et le bol;
un second joint d'étanchéité dynamique, disposé entre le couvercle et l'arbre d'entrainement afin de combler l'espace entre l'arbre d'entraînement et le couvercle ;
chaque joint présente une paroi intérieure, une partie de liaison agencée sur le couvercle, une lèvre annulaire et une gorge;
la lèvre annulaire étant mobile et déformable avec un angle α de débattement s'étendant vers l'extérieur par rapport à l'axe A de rotation, de manière à assurer l'étanchéité lorsque le couvercle est relié au bol en position de travail. Le premier joint d'étanchéité est dynamique dans son usage car il présente une mobilité relative par rapport au bol mais reste solidaire du couvercle. Le second joint d'étanchéité est dynamique dans son usage car il présente une mobilité relative par rapport au couvercle mais reste solidaire de l'arbre d'entrainement, contrairement aux joints statiques. La partie de liaison agit comme une articulation qui permet un débattement angulaire de la lèvre.

Selon une autre caractéristique de l'appareil selon l'invention, les premier et second joints d'étanchéité dynamiques peuvent être annulaires. Ces joints d'étanchéité dynamiques annulaires peuvent se présenter sous la forme d'une bague circulaire ou rectangulaire.

Selon une autre caractéristique de l'invention, ces joints d'étanchéité dynamiques peuvent être idéalement fabriqués dans une matière souple comme par exemple le silicone ou un thermoplastique élastomère.

Selon une autre caractéristique de l'appareil selon l'invention, la partie de liaison du premier ou du second joint peut être en position basse permettant une insertion facilitée du couvercle sur le bol. Ainsi le premier joint présente une partie de liaison dirigée de préférence vers l'unité de travail, permettant une insertion facilitée du couvercle lors de son accostage sur le bol. Le second joint permet une insertion facilitée de l'arbre d'entrainement dans sa coopération avec l'alésage du couvercle. Dans ces 2 cas, l'insertion est facilitée car la position basse de la partie de liaison positionne la lèvre annulaire comme un cône d'insertion qui facilite sa mise en place. L'agencement de la lèvre annulaire la fera glisser sur la face latérale du bol lors de son mouvement de fermeture de l'appareil culinaire, grâce la disposition inclinée de la lèvre en forme de biseau.

Selon une autre caractéristique de l'appareil selon l'invention, la partie de liaison du premier ou du second joint est en position haute. Ainsi le premier ou le second joint présente une partie de liaison dirigée de préférence vers le couvercle.

Avantageusement, cet agencement permet de garantir une étanchéité maximum de l'appareil culinaire. En effet, dans cette position le liquide ou semi liquide ayant soit tendance à remonter le long de l'arbre d'entrainement ou le long du bol, soit tendance à être projeté par l'unité de travail, remplira la gorge du joint et exercera une pression contre la paroi intérieure fixe et la lèvre annulaire. Celle-ci étant capable de se déformer, se plaquera contre la face latérale du bol pour le premier joint et contre l'alésage du couvercle pour le second joint, assurant ainsi une étanchéité maximum.

Selon une autre caractéristique de l'appareil selon l'invention, la lèvre annulaire du second joint peut être inclinée de manière à laisser la libre rotation de l'arbre d'entrainement. Ainsi la force de frottement ou de friction de la lèvre annulaire du second joint contre l'alésage n'empêche pas le mouvement de la corde lors de son tirage ou son retour. De préférence, la force de frottement de la lèvre annulaire du second joint est inférieure à la force de rappel du ressort. Dans le cas contraire, la force de frottement de la lèvre annulaire pourrait empêcher la libre rotation si cette force était trop importante, et venir bloquer le mouvement de l'arbre d'entrainement et le mouvement de rétractation de la corde.

Selon une autre caractéristique de l'appareil selon l'invention, la lèvre annulaire du premier joint est inclinée de manière à laisser la libre rotation du couvercle lors de son enclenchement au bol par un dispositif de fermeture à baïonnette. Ainsi l'épaisseur et la géométrie du joint sont avantageusement dimensionnés pour assurer le meilleur compromis entre l'étanchéité et la libre rotation des pièces, sans provoquer de blocage des pièces, notamment par la force exercée par un utilisateur enclenchant ou déclenchant le dispositif de fermeture à baïonnette.

Selon une autre caractéristique de l'appareil selon l'invention, la gorge des premier et second joints est agencée entre la paroi intérieure, la partie de liaison et la lèvre annulaire. Ainsi cet espace formé par la gorge est un espace de débattement pour permettre à la lèvre annulaire d'assurer sa fonction d'étanchéité. En effet, la gorge crée un espace qui permet le retour de la lèvre annulaire vers la paroi intérieure du joint sans la déformer, la partie de liaison jouant le rôle d'une articulation et la lèvre annulaire fléchissant depuis cette articulation vers la gorge.

Selon une autre caractéristique de l'appareil selon l'invention, la largeur de la section de la paroi intérieure présente une largeur x qui est au moins égale à la largeur de la section de la lèvre annulaire. Ainsi la section de la paroi intérieure présente une largeur x supérieure à celle de la largeur de la section de la lèvre annulaire, ce qui généralement détermine la souplesse de la lèvre. Cette souplesse est relative par rapport à celle de la paroi intérieure. Cela permet d'assurer la mobilité de la lèvre annulaire sans que la paroi intérieure ne se décolle ou se soulève de son logement ; en conservant la géométrie du joint quelle que soit la déformation de la lèvre annulaire. La lèvre reste mobile dans l'intégralité de son angle α de débattement sans provoquer la déformation de la paroi intérieure du joint.

Avantageusement le premier joint est agencé dans un premier logement qui peut être une nervure ou une encoche du couvercle. Le premier logement est un espace coopérant avec le joint afin de le recevoir. La géométrie du logement est adaptée à celle du joint afin qu'il puisse coopérer et s'y insérer. Ainsi, le premier logement permet de positionner aisément et d'orienter le joint par rapport au bol.

Avantageusement le second joint est agencé dans un second logement qui peut être une nervure ou une encoche de l'arbre d'entrainement. Le second logement est un espace coopérant avec le joint afin de le recevoir. La géométrie du logement est adaptée à celle du joint afin qu'il puisse coopérer et s'y insérer. Ainsi, le second logement permet de positionner aisément et d'orienter le joint par rapport au couvercle.

Selon une autre caractéristique de l'appareil selon l'invention, l'angle α de débattement est compris de 0° à 90°, de préférence de 0° à 45°. Ainsi l'angle α de débattement permet de compenser les variations dimensionnelles de l'espace résiduel entre l'alésage du couvercle et l'arbre d'entrainement et, entre le couvercle et le bol.

La lèvre annulaire du premier joint présente son angle α maximum de débattement lorsque le couvercle est détaché de l'appareil, c'est-à-dire en position de repos. La lèvre annulaire du premier joint présente son angle α minimum de débattement lorsque le couvercle est relié au bol en position de travail.

La lèvre annulaire du second joint présente son angle α maximum de débattement lorsque l'arbre d'entrainement est démonté du couvercle et sorti de l'alésage du couvercle. La lèvre annulaire du second joint présente son angle α minimum de débattement lorsque l'arbre d'entrainement est monté sur le couvercle.

Selon une autre caractéristique de l'appareil selon l'invention, le premier joint est amovible et agencé élastiquement dans un premier logement du couvercle. Ainsi le montage et démontage des joints sera facilité et cela aura pour conséquence de faciliter le nettoyage. En effet, les joints étant amovibles pour pouvoir être nettoyés plus facilement, il sera possible de les repositionner aisément.

Selon une autre caractéristique de l'appareil selon l'invention, le second joint est amovible et agencé élastiquement au niveau d'un second logement de l'arbre d'entraînement. Ainsi la facilité de démontage, de nettoyage et de remontage est équivalente à celle du premier joint.

Selon une autre caractéristique de l'appareil selon l'invention, la paroi intérieure du premier et du second joint est agencée en vis-à-vis de la lèvre annulaire. Ainsi la lèvre et la paroi intérieure sont agencées en face à face, et forment un espace de déformation, appelé la gorge, déterminant la pression ressort suivant l'angle α de débattement.

Selon une variante de l'appareil selon l'invention, la paroi intérieure peut être agencée transversalement par rapport à la lèvre annulaire mobile. Ainsi l'espace de débattement, qui permet à la lèvre d'assurer sa fonction d'étanchéité est conservé.

Selon une autre caractéristique de l'appareil selon l'invention, chaque joint présente une section en U ou en V.

Selon une autre caractéristique, l'appareil selon l'invention peut être un hachoir, un extracteur de jus ou un mélangeur.

### Brève description des dessins

On comprendra mieux les buts, aspects et avantages de la présente invention, d'après la description donnée ci-après de modes particuliers de réalisation de l'invention présentés à titre d'exemples non limitatifs, en se référant aux dessins annexés dans lesquels :
[Fig. 1] la figure 1 est une vue en coupe d'un appareil de préparation culinaire selon l'invention, de type hachoir, comprenant un premier et un second joints d'étanchéité dynamiques. Le hachoir est agencé dans sa phase de travail selon un mode particulier de réalisation de l'invention.
[Fig. 2] la figure 2 est une vue en coupe d'un premier joint avec sa partie de liaison en position haute selon un mode particulier de réalisation d'un hachoir selon l'invention.
[Fig. 3] la figure 3 est une vue coupe d'un premier joint avec sa partie de liaison en position basse selon un mode particulier de réalisation d'un hachoir selon l'invention.
[Fig. 4] la figure 4 est une vue en coupe d'un second joint avec sa partie de liaison en position haute selon un mode particulier de réalisation d'un hachoir selon l'invention.
[Fig. 5] la figure 5 est une vue en coupe d'un second joint avec sa partie de liaison en position basse selon un mode particulier de réalisation d'un hachoir selon l'invention.
[Fig. 6] la figure 6 est une vue en perspective d'un second joint avec sa partie de liaison en position basse agencée sur l'arbre d'entrainement du moteur à commande manuelle selon un mode particulier de réalisation d'un hachoir selon l'invention.
[Fig. 7] la figure 7 est une vue en perspective d'un second joint avec sa partie de liaison en position haute agencée sur l'arbre d'entrainement du moteur à commande manuelle selon un mode particulier de réalisation d'un hachoir selon l'invention.
[Fig. 8] la figure 8 est une vue en perspective d'un couvercle d'un hachoir selon l'invention selon un mode particulier de réalisation présentant un premier joint avec sa partie de liaison en position haute et un second joint avec sa partie de liaison en position haute agencée sur l'arbre d'entrainement du moteur à commande manuelle.
[Fig. 9] la figure 9 est une vue en perspective d'un couvercle d'un hachoir selon l'invention selon un mode particulier de réalisation présentant un premier joint avec sa partie de liaison en position basse et un second joint avec sa partie de liaison en position haute agencée sur l'arbre d'entrainement du moteur à commande manuelle.
[Fig. 10] la figure 10 est une vue en perspective d'un couvercle d'un hachoir selon l'invention selon un mode particulier de réalisation présentant un premier joint avec sa partie de liaison en position basse et un second joint avec sa partie de liaison en position basse agencée sur l'arbre d'entrainement du moteur à commande manuelle.
[Fig. 11] la figure 11 est une vue en perspective d'un couvercle d'un hachoir selon l'invention selon un mode particulier de réalisation présentant un premier joint avec sa partie de liaison en position haute et un second joint avec sa partie de liaison en position basse agencée sur l'arbre d'entrainement du moteur à commande manuelle.
[Fig. 12] la figure 12 est une vue en perspective d'un couvercle d'un hachoir selon l'invention selon un mode particulier de réalisation présentant un premier joint avec sa partie de liaison en position basse.
[Fig. 13] la figure 13 est une vue en perspective d'un couvercle d'un hachoir selon l'invention selon un mode particulier de réalisation présentant un premier joint avec sa partie de liaison en position haute.
[Fig. 14] la figure 14 est une vue en coupe d'un premier joint d'un hachoir selon l'invention selon un mode particulier de réalisation.
[Fig. 15] la figure 15 est une vue en coupe d'un second joint d'un hachoir selon l'invention selon un mode particulier de réalisation.
[Fig. 16] la figure 16 est une vue en coupe d'un premier joint d'un hachoir selon l'invention selon un mode particulier de réalisation.

### Description des modes de réalisation

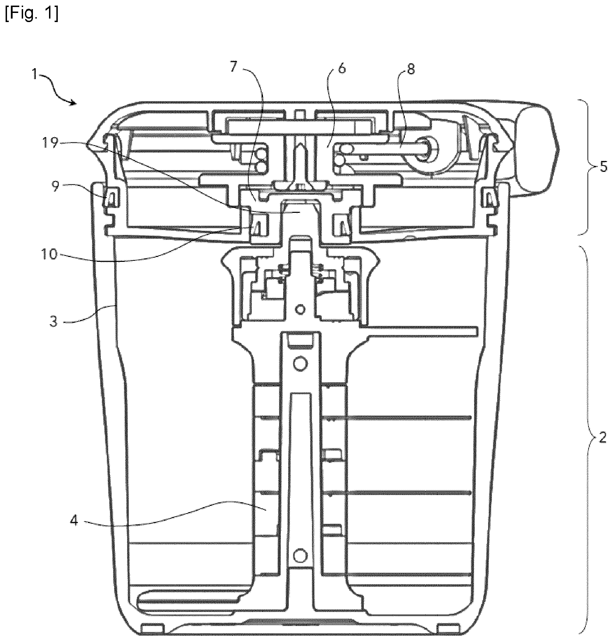

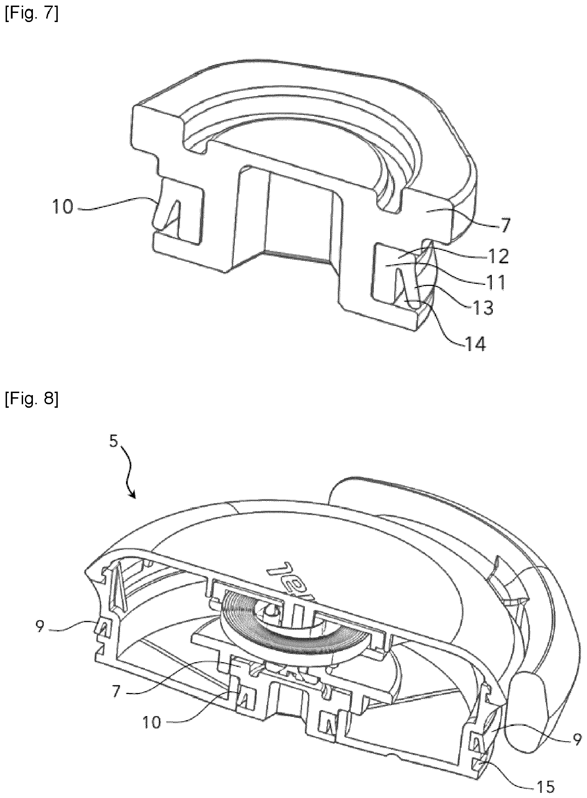

La figure 1 illustre un exemple d'appareil selon l'invention. Il s'agit d'un hachoir 1 à entrainement manuel comportant un bol 2 pour contenir les aliments à découper avec une face 3 latérale, un accessoire 4 de coupe rotatif amovible disposé dans le bol 2, un couvercle 5 amovible disposé sur le bol 2. Le couvercle 5 comprend un moteur 6 à commande manuelle pour entrainer en rotation un arbre 7 d'entraînement de l'accessoire 4 de coupe rotatif autour d'un axe A de rotation par traction d'une corde 8 transversalement à l'axe A de rotation. Le moteur 6 à commande manuelle comprend une roue d'entrainement, un ressort de rappel (visible sur les figures 8, 9, 10 et 11) et une corde 8 dont une extrémité est enroulée autour de la roue d'entrainement et dont l'autre extrémité est reliée à une poignée.

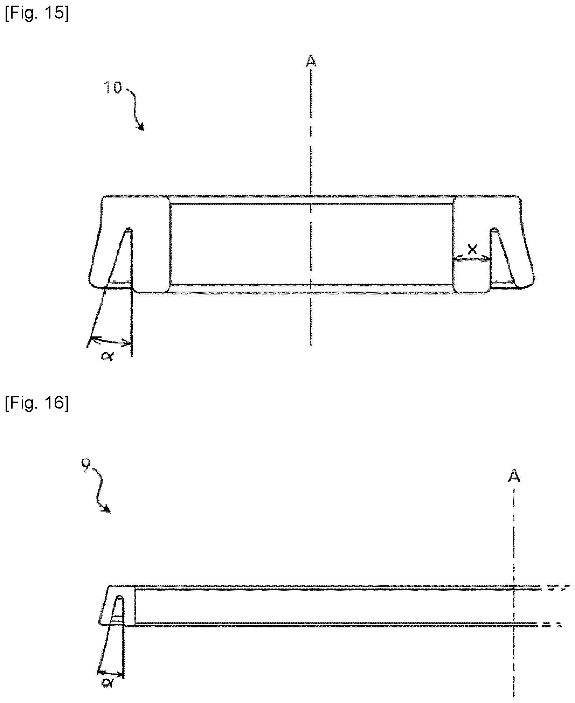

Le mouvement de rotation est transmis par l'arbre 7 d'entrainement du moteur à l'unité de travail via un accouplement 19. Le couvercle 5 comprend un premier joint 9 d'étanchéité dynamique disposé entre le couvercle 5 et la face 3 latérale du bol 2 afin de combler l'espace entre le couvercle 5 et le bol 2. Le couvercle 5 comprend un second joint 10 d'étanchéité dynamique, disposé entre le couvercle 5 et l'arbre 7 d'entrainement afin de combler l'espace entre l'arbre 7 d'entraînement et l'alésage 18 du couvercle 5 ; chaque joint 9 ; 10 présente une paroi 11 intérieure, une partie de liaison 12 agencée sur le couvercle 5, une lèvre 13 annulaire et une gorge 14. La lèvre 13 annulaire est mobile et déformable avec un angle α de débattement (visible sur les figures 15 et 16) s'étendant vers l'extérieur par rapport à l'axe A de rotation, de manière à assurer l'étanchéité lorsque le couvercle 5 est relié au bol 2 en position de travail.

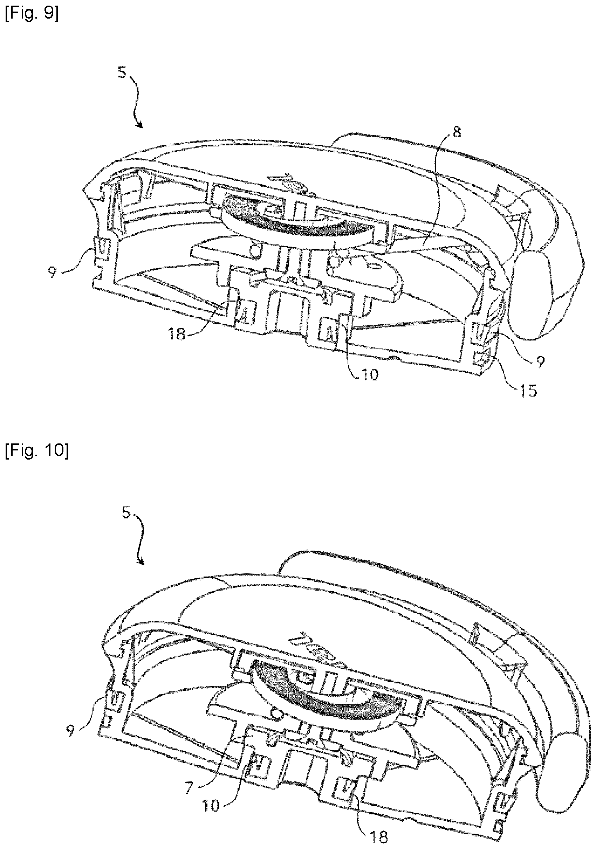

Le fonctionnement du hachoir illustré à la figure 1 est le suivant. Un utilisateur se saisit du couvercle 5 et met en place le premier joint 9, après l'avoir nettoyé, dans son logement 17 qui est une rainure agencée sur le pourtour du couvercle 5. Comme illustré à la figure 1 l'utilisateur positionne la partie de liaison 12 vers le haut en direction de la partie supérieure du couvercle 5. Puis l'utilisateur se saisit du second joint 10, après l'avoir nettoyé, et le place dans son logement 16 qui est une rainure agencée sur le pourtour de l'arbre 7 d'entrainement. Après réassemblage de l'arbre 7 d'entrainement dans l'alésage 18 du couvercle 5 et fermeture de l'ensemble, le couvercle 5 ainsi muni de ses 2 joints est amené vers le bol 2 afin de procéder à l'accostage du couvercle 5. L'utilisateur positionne les ergots du bol en vis-à-vis des baïonnettes 15 du couvercle (visibles sur la figure 9).

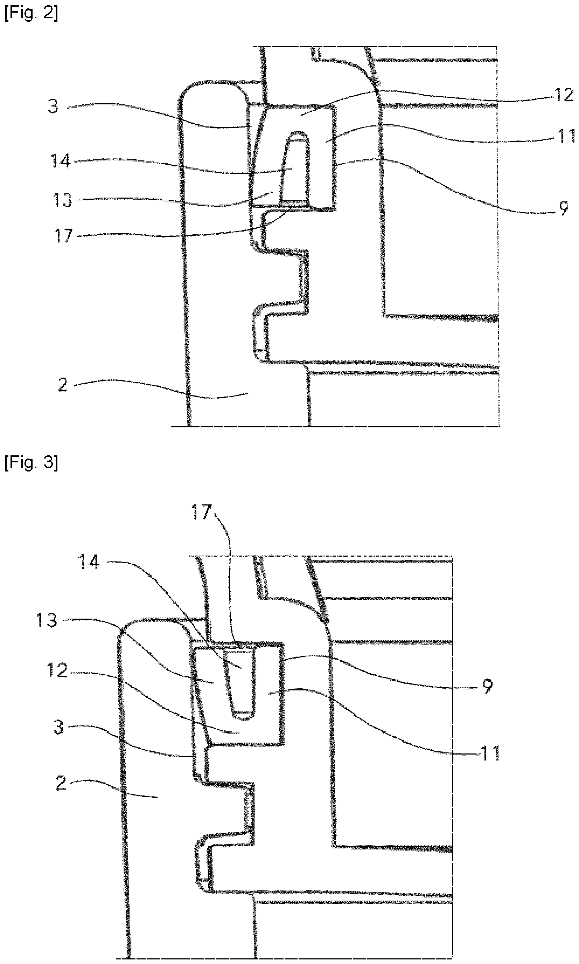

La figure 2 illustre le premier joint 9 agencé dans le premier logement 17 du couvercle 5, avec sa partie de liaison 12 orientée vers le haut et sa lèvre 13 annulaire orientée vers le bas, c'est-à-dire vers l'accessoire 4 de travail. La paroi 11 intérieure est disposée dans le fond du premier logement 17 du couvercle.

La figure 3 illustre le premier joint 9 agencé dans le premier logement 17 du couvercle 5, avec sa partie de liaison 12 orientée vers le bas, c'est-à-dire l'accessoire 4 de travail, et sa lèvre 13 annulaire orientée vers le haut, c'est-à-dire vers le couvercle 5. La paroi 11 intérieure est disposée dans le fond du premier logement 17 du couvercle.

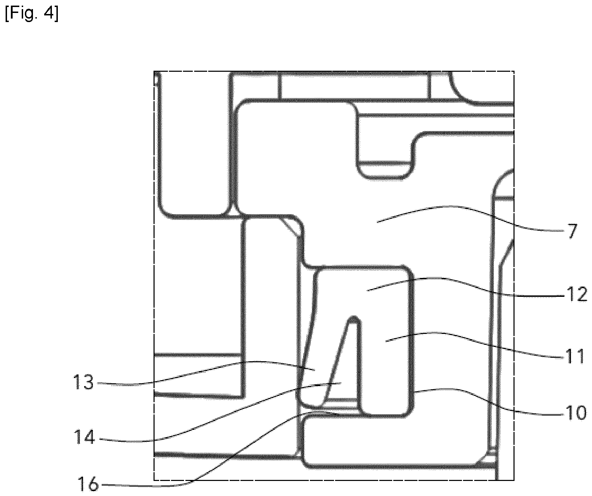

La figure 4 illustre le second joint 10 agencé dans le second logement 16 du couvercle 5, avec sa partie de liaison 12 orientée vers le haut et sa lèvre 13 annulaire orientée vers le bas, c'est-à-dire vers l'accessoire 4 de travail. La paroi 11 intérieure est disposée dans le fond du second logement 16 de l'arbre 7 d'entrainement.

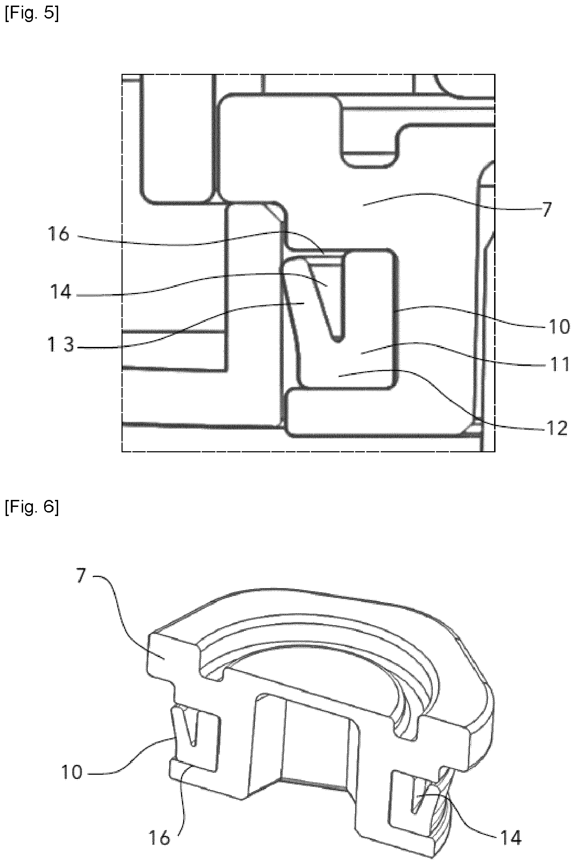

La figure 5 illustre le second joint 10 agencé dans le second logement 16 de l'arbre 7 d'entrainement, avec sa partie de liaison 12 orientée vers le bas, c'est-à-dire l'accessoire 4 de travail et sa lèvre 13 annulaire orientée vers le haut, c'est-à-dire vers le couvercle 5. La paroi 11 intérieure est disposée dans le fond du second logement 16 de l'arbre 7 d'entrainement du couvercle 5.

La figure 6 illustre le second joint 10 agencé dans le second logement 16 de l'arbre 7 d'entrainement, avec sa partie de liaison 12 orientée vers le bas, c'est-à-dire l'accessoire 4 de travail, et sa lèvre 13 annulaire orientée vers le haut, c'est-à-dire vers le couvercle 5. La partie 11 intérieure est disposée dans le fond du second logement 17 du couvercle.

La figure 7 illustre le second joint 10 agencé dans le second logement 16 de l'arbre 7 d'entrainement, avec sa partie de liaison 12 orientée vers le haut, c'est-à-dire vers le couvercle 5, et sa lèvre 13 annulaire orientée vers le bas, c'est-à-dire vers l'accessoire 4 de travail. La partie 11 intérieure est disposée dans le fond du second logement 17 du couvercle.

La figure 8 illustre le couvercle 5 avec les premier et second joints 9, 10 agencés avec leurs parties de liaison 12 orientées vers le haut, c'est-à-dire vers le couvercle 5, et leurs lèvres 13 annulaires orientées vers le bas, c'est-à-dire vers l'accessoire 4 de travail.

La figure 9 illustre le premier joint 9 agencé dans le premier logement 17 du couvercle 5, avec sa partie de liaison 12 orientée vers le bas, c'est-à-dire vers l'accessoire 4 de travail, et sa lèvre 13 annulaire orientée vers le haut, c'est-à-dire vers le couvercle 5. Le second joint 10 est agencé dans le second logement 16 de l'arbre 7 d'entrainement, avec sa partie de liaison 12 orientée vers le haut, c'est-à-dire vers le couvercle 5, et sa lèvre 13 annulaire orientée vers le bas, c'est-à-dire vers l'accessoire 4 de travail.

La figure 10 illustre le couvercle 5 avec les premier et second joints 9, 10 agencés avec leurs parties de liaison 12 orientées vers le bas, c'est-à-dire vers l'accessoire 4 de travail, et leurs lèvres 13 annulaires orientées vers le haut, c'est-à-dire le couvercle 5.

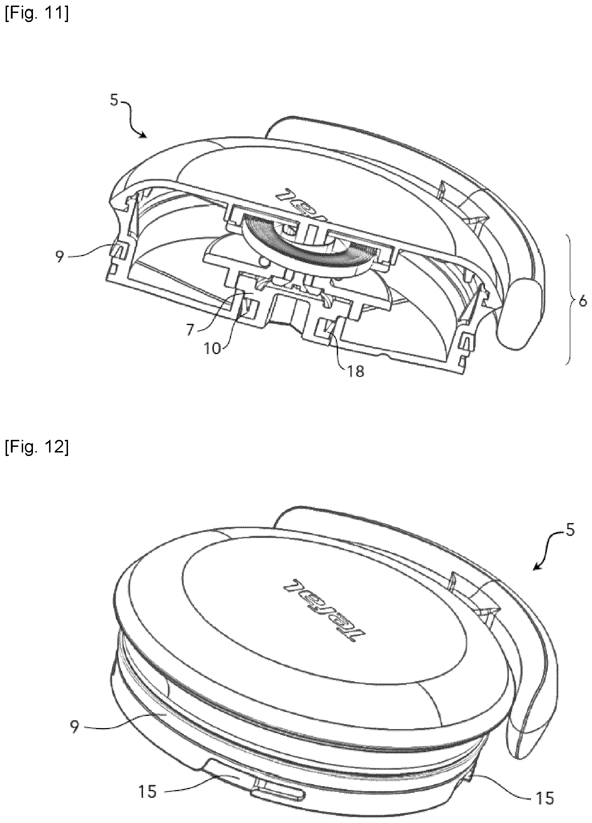

La figure 11 illustre le premier joint 9 agencé dans le premier logement 17 du couvercle 5, avec sa partie de liaison 12 orientée vers le haut, c'est-à-dire vers le couvercle 5, et sa lèvre 13 annulaire orientée vers le bas, c'est-à-dire l'accessoire 4 de travail. Le second joint 10 agencé dans le second logement 16 de l'arbre 7 d'entrainement logé dans l'alésage 18 du couvercle 5, avec sa partie de liaison 12 orientée vers le bas, c'est-à-dire vers l'accessoire 4 de travail, et sa lèvre 13 annulaire orientée vers le haut, c'est-à-dire vers le couvercle 5.

La figure 12 illustre le couvercle 5 avec le premier joint 9 dont la partie de liaison 12 est orientée vers le bas et présentant un dispositif 15 de fermeture à baïonnette.

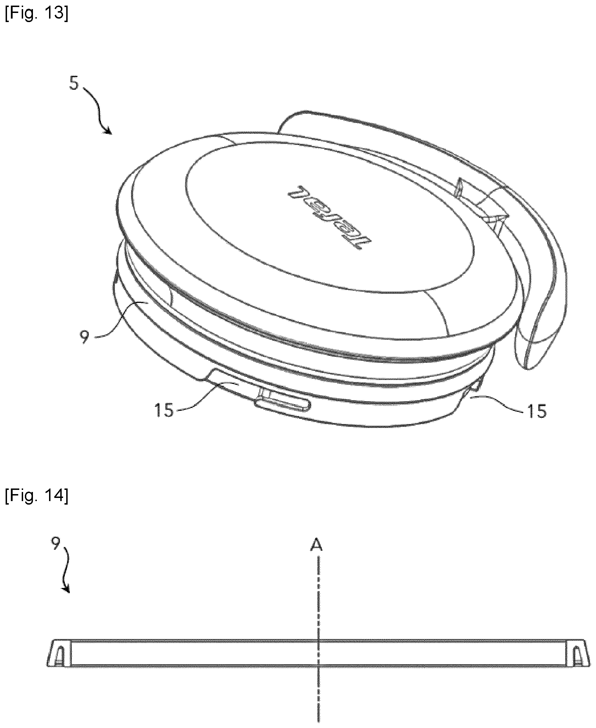

La figure 13 illustre le couvercle 5 avec le premier 9 joint dont la partie de liaison 12 est orientée vers le haut et présentant un dispositif 15 de fermeture à baïonnette.

La figure 14 illustre le premier joint 9.

La figure 15 illustre le second joint 10 avec son angle α de débattement.

La figure 16 illustre le premier joint 10 avec son angle α de débattement.

## Revendications

1. Appareil (1) de préparation culinaire à entrainement manuel comportant un bol (2) pour contenir les aliments à traiter avec une face (3) latérale, un accessoire (4) de travail rotatif amovible disposé dans le bol (2),
un couvercle (5) amovible disposé sur le bol (2),
le couvercle (5) comprenant un moteur (6) à commande manuelle pour entrainer en rotation un arbre (7) d'entraînement de l'accessoire (4) de travail rotatif autour d'un axe A de rotation par traction d'une corde (8) transversalement à l'axe A de rotation,
un premier joint (9) d'étanchéité dynamique disposé entre le couvercle (5) et la face (3) latérale du bol (2) afin de combler l'espace entre le couvercle (5) et le bol (2); **caractérisé en ce que** le couvercle comprend
un second joint (10) d'étanchéité dynamique, disposé entre le couvercle (5) et l'arbre (7) d'entrainement afin de combler l'espace entre l'arbre (7) d'entraînement et le couvercle (5) ;
chaque joint (9 ; 10) présente une paroi (11) intérieure, une partie de liaison (12) agencée sur le couvercle (5), une lèvre (13) annulaire et une gorge (14), la lèvre (13) annulaire étant mobile et déformable avec un angle α de débattement s'étendant vers l'extérieur par rapport à l'axe A de rotation, de manière à assurer l'étanchéité lorsque le couvercle (5) est relié au bol (2) en position de travail.

2. Appareil (1) de préparation culinaire selon la revendication 1 **caractérisé en ce que** les premier et second joints (9 ; 10) d'étanchéité dynamique sont annulaires.

3. Appareil (1) de préparation culinaire selon l'une des revendications précédentes **caractérisé en ce que** la partie de liaison (12) du premier ou du second joint (9 ; 10) est en position basse permettant une insertion facilitée du couvercle (5) sur le bol (2).

4. Appareil (1) de préparation culinaire selon l'une des revendications précédentes **caractérisé en ce que** la partie de liaison (12) du premier ou du second joint (9 ; 10) est en position haute.

5. Appareil (1) de préparation culinaire selon l'une des revendications précédentes **caractérisé en ce que** la lèvre (13) annulaire du second joint (10) est inclinée de manière à laisser la libre rotation de l'arbre (7) d'entrainement.

6. Appareil (1) de préparation culinaire selon l'une des revendications précédentes **caractérisé en ce que** la lèvre (13) annulaire du premier joint (9) est inclinée de manière à laisser la libre rotation du couvercle (5) dans son enclenchement au bol (2) par un dispositif de fermeture à baïonnette (15).

7. Appareil (1) de préparation culinaire selon l'une des revendications précédentes **caractérisé en ce que** la gorge (14) des premier et second joints (9 ; 10) est agencée entre la paroi (11) intérieure, la partie de liaison (12) et la lèvre (13) annulaire.

8. Appareil (1) de préparation culinaire selon l'une des revendications précédentes **caractérisé en ce que** la largeur de la section de la paroi (11) intérieure présente une largeur x qui est au moins égale à la largeur de la section de la lèvre (13) annulaire.

9. Appareil (1) de préparation culinaire selon l'une des revendications précédentes **caractérisé en ce que** l'angle α de débattement est compris de 0° à 90°, de préférence de 0° à 45°.

10. Appareil (1) de préparation culinaire selon l'une des revendications précédentes **caractérisé en ce que** le premier joint (9) est amovible et agencé élastiquement dans un premier logement (17) du couvercle (5).

11. Appareil (1) de préparation culinaire selon l'une des revendications précédentes **caractérisé en ce que** le second joint (10) est amovible et agencé élastiquement au niveau d'un second logement (16) de l'arbre (7) d'entraînement.

12. Appareil (1) de préparation culinaire selon l'une des revendications précédentes **caractérisé en ce que** la paroi (11) intérieure du premier et du second joint (9, 10) est agencée en vis-à-vis de la lèvre (13) annulaire.

13. Appareil (1) de préparation culinaire selon l'une des revendications précédentes **caractérisé en ce que** la paroi (11) intérieure est agencée transversalement par rapport à la lèvre (13) annulaire mobile.

14. Appareil (1) de préparation culinaire selon l'une des revendications précédentes **caractérisé en ce que** chaque joint (9; 10) présente une section en U ou en V.

15. Appareil (1) selon l'une des revendications précédentes **caractérisé en ce qu'**il est un hachoir, un extracteur de jus ou un mélangeur.

## Patentansprüche

1. Nahrungsmittelzubereitungseinrichtung (1) mit manuellem Antrieb, umfassend eine Schüssel (2) zum Enthalten der zu verarbeitenden Nahrungsmittel mit einer Seitenfläche (3), ein abnehmbares drehbares Arbeitszubehör (4), das in der Schüssel (2) angeordnet ist, einen abnehmbaren Deckel (5), der auf der Schüssel (2) angeordnet ist,
wobei der Deckel (5) einen Motor (6) mit manuellem Antrieb umfasst, um eine Antriebswelle (7) des drehbaren Arbeitszubehörs (4) um eine Drehachse A durch Ziehen einer zur Drehachse A querverlaufenden Sehne (8) in Drehung zu versetzen,
eine erste dynamische Verschlussdichtung (9), die zwischen dem Deckel (5) und der Seitenfläche (3) der Schüssel (2) angeordnet ist, um den Raum zwischen dem Deckel (5) und der Schüssel (2) zu schließen; **dadurch gekennzeichnet, dass** der Deckel Folgendes umfasst
eine zweite dynamische Verschlussdichtung (10), die zwischen dem Deckel (5) und der Antriebswelle (7) angeordnet ist, um den Raum zwischen der Antriebswelle (7) und dem Deckel (5) zu schließen;
wobei jede Dichtung (9; 10) eine Innenwand (11), ein auf dem Deckel (5) eingerichtetes Verbindungsteil (12), eine ringförmige Lippe (13) und eine Kehle (14) aufweist, wobei die ringförmige Lippe (13) beweglich und bei einem Ausschlagwinkel a, der sich in Bezug auf die Drehachse A nach außen erstreckt, verformbar ist, sodass die Dichtung gewährleistet wird, wenn der Deckel (5) in der Arbeitsposition mit der Schüssel (2) verbunden ist.

2. Nahrungsmittelzubereitungseinrichtung (1) nach Anspruch 1, **dadurch gekennzeichnet, dass** die erste und die zweite dynamische Verschlussdichtung (9, 10) ringförmig sind.

3. Nahrungsmittelzubereitungseinrichtung (1) nach einem der vorstehenden Ansprüche, **dadurch gekennzeichnet, dass** das Verbindungsteil (12) der ersten oder der zweiten Dichtung (9; 10) in einer niedrigen Position ist, was einen erleichterten Einsatz des Deckels (5) auf der Schüssel (2) erlaubt.

4. Nahrungsmittelzubereitungseinrichtung (1) nach einem der vorstehenden Ansprüche, **dadurch gekennzeichnet, dass** das Verbindungsteil (12) der ersten oder der zweiten Dichtung (9; 10) in einer hohen Position ist.

5. Nahrungsmittelzubereitungseinrichtung (1) nach einem der vorstehenden Ansprüche, **dadurch gekennzeichnet, dass** die ringförmige Lippe (13) der zweiten Dichtung (10) geneigt ist, sodass die freie Drehung der Antriebswelle (7) ermöglicht wird.

6. Nahrungsmittelzubereitungseinrichtung (1) nach einem der vorstehenden Ansprüche, **dadurch gekennzeichnet, dass** die ringförmige Lippe (13) der ersten Dichtung (9) geneigt ist, sodass die freie Drehung des Deckels (5) in seiner Einraststellung an der Schüssel (2) durch eine Bajonett-Verschlussvorrichtung (15) ermöglicht wird.

7. Nahrungsmittelzubereitungseinrichtung (1) nach einem der vorstehenden Ansprüche, **dadurch gekennzeichnet, dass** die Kehle (14) der ersten und der zweiten Dichtung (9; 10) zwischen der Innenwand (11), dem Verbindungsteil (12) und der ringförmigen Lippe (13) eingerichtet ist.

8. Nahrungsmittelzubereitungseinrichtung (1) nach einem der vorstehenden Ansprüche, **dadurch gekennzeichnet, dass** die Breite des Abschnitts der Innenwand (11) eine Breite x aufweist, die mindestens gleich der Breite des Abschnitts der ringförmigen Lippe (13) ist.

9. Nahrungsmittelzubereitungseinrichtung (1) nach einem der vorstehenden Ansprüche, **dadurch gekennzeichnet, dass** der Ausschlagwinkel α von 0° bis 90°, vorzugsweise von 0° bis 45° beträgt.

10. Nahrungsmittelzubereitungseinrichtung (1) nach einem der vorstehenden Ansprüche, **dadurch gekennzeichnet, dass** die erste Dichtung (9) abnehmbar ist und elastisch in einer ersten Aufnahme (17) des Deckels (5) eingerichtet ist.

11. Nahrungsmittelzubereitungseinrichtung (1) nach einem der vorstehenden Ansprüche, **dadurch gekennzeichnet, dass** die zweite Dichtung (10) abnehmbar ist und elastisch an einer zweiten Aufnahme (16) der Antriebswelle (7) eingerichtet ist.

12. Nahrungsmittelzubereitungseinrichtung (1) nach einem der vorstehenden Ansprüche, **dadurch gekennzeichnet, dass** die Innenwand (11) der ersten und der zweiten Dichtung (9; 10) gegenüber der ringförmigen Lippe (13) eingerichtet ist.

13. Nahrungsmittelzubereitungseinrichtung (1) nach einem der vorstehenden Ansprüche, **dadurch gekennzeichnet, dass** die Innenwand (11) in Bezug auf die bewegliche ringförmige Lippe (13) querverlaufend eingerichtet ist.

14. Nahrungsmittelzubereitungseinrichtung (1) nach einem der vorstehenden Ansprüche, **dadurch gekennzeichnet, dass** jede Dichtung (9; 10) einen U- oder V-förmigen Querschnitt aufweist.

15. Nahrungsmittelzubereitungseinrichtung (1) nach einem der vorstehenden Ansprüche, **dadurch gekennzeichnet, dass** sie ein Hackmesser, ein Saftextraktor oder ein Mischgerät ist.

## Claims

1. Manual drive cooking preparation appliance (1) comprising a bowl (2) to contain food to process with a side face (3), a removable rotary working accessory (4) disposed in the bowl (2), a removable cover (5) disposed on the bowl (2),
the cover (5) comprising a manual command motor (6) to rotate a drive shaft (7) of the rotary working accessory (4) about an axis A of rotation by traction of a cord (8) transversally to the axis A of rotation,
a first dynamic seal (9) disposed between the cover (5) and the side face (3) of the bowl (2) in order to fill the space between the cover (5) and the bowl (2); **characterised in that** the cover comprises
a second dynamic seal (10), disposed between the cover (5) and the drive shaft (7) in order to fill the space between the drive shaft (7) and the cover (5);
each seal (9; 10) has an inner wall (11), a connecting part (12) arranged on the cover (5), an annular lip (13) and a recess (14), the annular lip (13) being movable and deformable with an angle α of displacement extending outwards with respect to the axis A of rotation, so as to ensure the sealing when the cover (5) is connected to the bowl (2) in the working position.

2. Cooking preparation appliance (1) according to claim 1, **characterised in that** the first and second dynamic seals (9; 10) are annular.

3. Cooking preparation appliance (1) according to one of the preceding claims, **characterised in that** the connecting part (12) of the first or of the second seal (9; 10) is in a low position allowing a facilitated insertion of the cover (5) on the bowl (2).

4. Cooking preparation appliance (1) according to one of the preceding claims, **characterised in that** the connecting part (12) of the first or of the second seal (9; 10) is in a high position.

5. Cooking preparation appliance (1) according to one of the preceding claims, **characterised in that** the annular lip (13) of the second seal (10) is inclined so as to lower the free rotation of the drive shaft (7).

6. Cooking preparation appliance (1) according to one of the preceding claims, **characterised in that** the annular lip (13) of the first seal (9) is inclined so as to allow the free rotation of the cover (5) in its engagement of the bowl (2) by a bayonet closing device (15).

7. Cooking preparation appliance (1) according to one of the preceding claims, **characterised in that** the recess (14) of the first and second seals (9; 10) is arranged between the inner wall (11), the connecting part (12) and the annular lip (13).

8. Cooking preparation appliance (1) according to one of the preceding claims, **characterised in that** the width of the cross-section of the inner wall (11) has a width x which is at least equal to the width of the cross-section of the annular lip (13).

9. Cooking preparation appliance (1) according to one of the preceding claims, **characterised in that** the angle α of displacement is between 0° to 90°, preferably from 0° to 45°.

10. Cooking preparation appliance (1) according to one of the preceding claims, **characterised in that** the first seal (9) is removable and arranged elastically in a first housing (17) of the cover (5).

11. Cooking preparation appliance (1) according to one of the preceding claims, **characterised in that** the second seal (10) is removable and arranged elastically at a second housing (16) of the drive shaft (7).

12. Cooking preparation appliance (1) according to one of the preceding claims, **characterised in that** the inner wall (11) of the first and of the second seal (9, 10) is arranged opposite the annular lip (13).

13. Cooking preparation appliance (1) according to one of the preceding claims, **characterised in that** the inner wall (11) is arranged transversally with respect to the movable annular lip (13).

14. Cooking preparation appliance (1) according to one of the preceding claims, **characterised in that** each seal (9; 10) has a U-shaped or V-shaped cross-section.

15. Appliance (1) according to one of the preceding claims, **characterised in that** it is a chopper, a juice extractor or a mixer.
